# EUROPEAN PATENT APPLICATION

(11) **EP 3 502 118 A1**
(43) Date of publication of application: **26.06.2019**
(21) Application number: 17382892.2
(22) Date of filing: 22.12.2017
(51) Int. Cl.: C07G 1/00

(54) **ULTRA-FAST LIGNIN DEPOLYMERIZATION PROCESS**

(71) Applicant: Universidad De Valladolid, 47002 Valladolid (ES)
(72) Inventor: ABAD FERNÁNDEZ, Nerea, E-34419 Villalobón-Palencia (ES); PÉREZ VELILLA, Eduardo, E-47002 Valladolid (ES); COCERO ALONSO, María José, E-47006 Valladolid (ES)
(74) Representative: ABG Intellectual Property, S.L.

(57) **Abstract**

The present invention refers to a process for depolymerizing lignin in times under the second and at elevated temperature and pressure. The process of the invention can be carried out as a continuous flow process and provides high yields of high-value oligomeric and monomeric phenolic compounds derived from lignin.

## Description

### FIELD OF THE INVENTION

The present invention relates to the field of lignin valorization, in particular to the conversion of lignin products into added value small organic molecules useful in a range of industrial fields such as the cosmetic, food or pharmaceutical industries, or for obtaining building block molecules.

### BACKGROUND OF THE INVENTION

Lignin is a natural resource which exists in woody materials, agricultural residues and other plant materials (so-called lignocellulosic materials). Lignocellulosic materials generally comprise 10-30% lignin by weight, the exact proportion depending on the source of the lignocellulosic material. Softwoods are known to contain higher contents of lignin, followed by hardwoods and then grasses.

Lignin is a complex natural polymer resulting from oxidative coupling of, primarily, 4-hydroxyphenylpropanoid units, and more particularly of the three major phenylpropanoid building units *p*-coumaryl, coniferyl and synapyl alcohols (depicted below). These units are randomly connected in lignin by several interunit ether and carbon-carbon linkages in different proportions, forming a randomized three dimensional amorphous polymer structure.

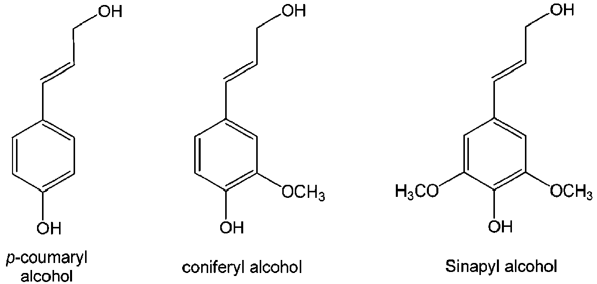

Lignin has so far mainly been used as an energy source in combustion processes. In fact, less than 5% lignin is used for other purposes. Because of its polymer structure, lignin is considered a potential renewable resource of high-value chemicals, in particular of small, generally monomeric, phenolic compounds which find widespread applications such as in the cosmetic, food or pharmaceutical industries, or for obtaining building block molecules. Examples of such compounds are vanillin or syringol.

A considerable amount of research has focused on the depolymerization of lignin. A number of methods have been developed with such purpose, including pyrolysis, gasification, hydrolysis or biochemical processes. Particular attention has been paid to the hydrolysis of lignin in supercritical fluids.

Document WO 2015/075290 discloses the depolymerization of lignin in black liquor at temperatures of 250-500°C and pressures of 5-30 MPa. However, the process reported therein requires very long reaction times (30 minutes to 2 hours) and leads to low yields and low selectivity of important monomeric phenols (0.03% guaiacol, 0.2% vanillin, or 0.07% acetovanillone). Furthermore, the document only refers to a noncontinuous (i.e. batch) process. These represent important drawbacks, as reduced depolymerization times and continuous flow processes are eagerly desired from an industrial standpoint.

Attempts at achieving lower depolymerization times with continuous flow setups, especially ultra-fast depolymerization rates under the second, have so far proven rather unsuccessful. Matsumara et al. (Industrial & Engineering Chemistry Research, 2012, 51, 11975-11988) studied the continuous conversion of lignin employing supercritical water and reaction times of 0.5 s or higher. However, whilst rapid lignin decomposition was recorded at 0.5 s, the decomposed lignin was mainly transformed into char (roughly 60% yield char) instead of into the desired phenolic compounds of interest.

Thus, there is still a need for developing efficient and selective, rapid, and industry-oriented processes for the production of high value small organic compounds from lignin.

### SUMMARY OF THE INVENTION

It has now surprisingly been found that high value phenolic compounds can be produced from lignin in very good yields and selectivities, with depolymerization times below the second, when employing the process of the present invention. Furthermore, this process can be used in a continuous flow setup and is therefore highly suited to its use at an industrial level.

In particular, the process of the present invention is a process for the depolymerization of lignin comprising the following steps:
a) Providing a lignin solution or suspension;
b) Bringing the solution or suspension resulting from step b) to a temperature from 350 to 430°C and to a pressure of at least 220 bar, and maintaining, simultaneously, said pressure and temperature for a time of between 40 and 450 ms, in order to obtain a depolymerized lignin mixture comprising oligomeric and monomeric phenolic compounds.

### BRIEF DESCRIPTION OF THE DRAWINGS

**Figure 1**. a) Simplified schematic depiction of a system for carrying out the process of the present invention as a continuous flow process; b) closer detail of a mixing means, reactor, and cooling/decompression means suitable for carrying out the process of the present invention as a continuous flow process.
**Figure 2**. Schematic depiction of a representative phenolic oligomer and/or phenolic monomer isolation process according to the present invention.
**Figure 3****.** Effect of temperature on a) first phenolic oil yield; and b) final solid phase; in the absence of base.
**Figure 4****.** Effect of time on phenolic oil yield in a) the absence; and b) the presence of base.

### DETAILED DESCRIPTION OF THE INVENTION

The process of the present invention is a process for the depolymerization of lignin. In the context of the present invention, the term "lignin" has the meaning generally recognized in the art, which was described hereinabove.

The depolymerization of lignin refers to the degradation of the lignin macromolecule into smaller fragments. The depolymerization involves, amongst others, the cleavage of ether bonds, in particular aryl ether bonds, in the lignin macromolecule, along with other reactions such as dealkylations. The mixture of products obtained from lignin depolymerization depends on the process of lignin depolymerization employed, and is generally difficult to characterize in full. However, as new processes of lignin depolymerization are developed, different lignin depolymerization product mixtures can be obtained. In particular, new processes of lignin depolymerization can favour higher proportions of specific lignin depolymerization products which may be of high value and/or commercial interest.

In a preferred embodiment the depolymerization of lignin refers to the conversion of the lignin macromolecule into phenolic oligomers and phenolic monomers. The term "phenolic oligomers" refers to compounds which comprise at least two and up to ten phenol functional groups. The oligomer is preferably a tetramer (four phenol functional groups), a trimer (three phenol functional groups) or a dimer (two phenol functional groups).

In a more preferred embodiment the depolymerization of lignin refers to the conversion of the lignin macromolecule into phenolic monomers. The term phenolic monomer refers to compounds which present a single phenol functional group. Examples of phenolic monomers include phenol, guaiacol, alkyl guaiacols such as creosol, 5-methylguaiacol or 4-ethylguaiacol, 4-vinylguaiacol, guaiacyl acetone, eugenol, isoeugenol, 4-hydroxybenzaldehyde, vanillin, vanillic acid, homovanillic acid, homovanillyl alcohol, acetovanillone, propiovanillone, syringaldehyde, 3,4,5-trimethoxybenzyl alcohol, 4-hydroxyacetophenone, 4-hydroxybenzoic acid, syringol, acetosyringone, syringic acid, ferulic acid, caffeic acid, dehydrozingerone, sinapyl alcohol, coniferyl alcohol or p-coumaric acid.

In a particularly preferred embodiment the depolymerization of lignin refers to the conversion of the lignin macromolecule into guaiacol, creosol, vanillin, acetovanillone, homovanillic acid, 5-methyl guaiacol, acetosyringone, syringaldehyde and/or syringol. More preferably, it refers to the conversion of the lignin macromolecule into syringol, vanillin and/or homovanillic acid. In a preferred particular embodiment, it refers to the conversion of the lignin macromolecule in black liquor into syringol, syringaldehyde and vanillin. In another preferred particular embodiment, it refers to the conversion of the lignin macromolecule in Kraft lignin into vanillin and/or homovanillic acid.

In a preliminary step of the process of the present invention, a lignin product is provided, i.e. a product comprising lignin. The lignin product of the preliminary step of the present invention can comprise any lignin known in the art. Preferably the lignin is Kraft lignin or organosolv lignin. Other kinds of lignins known in the art are Brauns' lignin, cellulolytic enzyme lignin, dioxane acidolysis lignin, Klason lignin, periodate lignin, lignosulfates, lignosulfonates, and steam explosion lignin.

Lignin can also be classified based on the biomass submitted to a fractionation process.

In an embodiment, the lignin is hardwood lignin, i.e. lignin obtained from the fractionation of hardwood. Examples of hardwoods are eucalyptus, aspen or birch wood.

In another embodiment, the lignin is softwood lignin, i.e. lignin obtained from the fractionation of softwood. Examples of softwoods are spruce, pine, fir, larch or hemlock wood.

In another embodiment, the lignin is plant lignin, more particularly grass (Poaceae or Gramineae) lignin, i.e. lignin obtained from the fractionation of plant/grass material. Examples of plant material from which lignin can be obtained are the tobacco plant, cereal straw (e.g. wheat straw) or beet pulp.

In an embodiment, the lignin in the lignin product is obtained from a mixture of different lignocellulosic biomasses, preferably from a mixture of wood (softwood or hardwood) and plant material, in particular wood (softwood or hardwood) and grass.

In an embodiment, the lignin product is black liquor obtained from wood and/or plant material.

In an embodiment, the lignin is neither acylated nor alkylated prior to subjecting it to depolymerization.

In a preferred embodiment, the lignin product comprises at least 0.1% lignin by weight with respect to the total weight of the lignin product. In a particular embodiment, the percentage of lignin by weight with respect to the total weight of the lignin product is at least 1 %. In a particular embodiment, the percentage of lignin by weight with respect to the total weight of the lignin product is at least 5%. In a particular embodiment, the percentage of lignin by weight with respect to the total weight of the lignin product is at least 10%. In a particular embodiment, the percentage of lignin by weight with respect to the total weight of the lignin product is at least 20%. In another particular embodiment this percentage is at least 30%. In another particular embodiment it is at least 40%. In another particular embodiment it is at least 50%. In another particular embodiment it is at least 60%. In another particular embodiment it is at least 70%. In another particular embodiment it is at least 80%. In another particular embodiment it is at least 90%. In another particular embodiment it is at least 95%. In another particular embodiment it is at least 99%. In another embodiment, the lignin product consists of lignin.

In a preferred embodiment the lignin product comprises at most 50% cellulose by weight with respect to the total weight of the lignin product. In a particular embodiment, the percentage of cellulose by weight with respect to the total weight of the lignin product is at most 40%. In another particular embodiment this percentage is at most 30%. In another particular embodiment it is at most 20%. In another particular embodiment it is at most 10%. In another particular embodiment it is at most 1%. In another embodiment, the lignin product comprises no cellulose.

In a preferred embodiment the lignin product comprises at most 50% hemicellulose by weight with respect to the total weight of the lignin product. In a particular embodiment, the percentage of hemicellulose by weight with respect to the total weight of the lignin product is at most 40%. In another particular embodiment this percentage is at most 30%. In another particular embodiment it is at most 20%. In another particular embodiment it is at most 10%. In another particular embodiment it is at most 1%. In another embodiment, the lignin product comprises no hemicellulose.

In the context of the present invention, lignin, hemicellulose and cellulose content are determined by the method described herein below (see working example Determination of Structural Composition of Biomass).

The above amounts of lignin and/or cellulose and/or hemicellulose may be combined to arrive at combined embodiments. For instance, in a particular embodiment, the lignin product comprises at most 50% cellulose by weight and at least 50% lignin by weight, with respect to the total weight of the lignin product.

Lignin products comprising the above amounts of lignin and/or cellulose and/or hemicellulose are known in the art. These products are commercially available (e.g. from Sigma-Aldrich, CAS 8068-05-1) or can be prepared by methods well known in the art, such as by fractionation of lignocellulosic biomasses.

As used herein, "biomass" refers to a renewable energy source generally comprising carbon-based biological material derived from living organisms. The organisms may be plants, animals, fungi, etc. The term "biomass" as used herein does not include fossil fuel sources.

As used herein, "lignocellulosic biomass" refers to a biomass, preferably a plant biomass, comprising cellulose and/or hemicellulose, and lignin. Lignocellulosic biomass can be obtained from a variety of sources, for example from: agricultural waste, including corn stover and sugarcane bagasse; or wood, including hardwoods (such as eucalyptus, aspen or birch wood) and softwoods (such as spruce, pine, fir, larch and hemlock wood).

A prominent example of lignocellulosic biomass fractionation is the pulping process. Different kinds of pulping processes are known, such as the Kraft process, the sulfite process, or organosolv pulping. These methods generally refer to the treatment of a lignocellulosic biomass with a cooking liquor to break the bonds that link lignin, hemicellulose, and cellulose, and result in the production as a by-product of pulping liquors comprising lignin and hemicellulose, from which lignin can be precipitated.

The Kraft pulping process involves treatment of the lignocellulosic biomass with a mixture of water, sodium hydroxide, and sodium sulfide (the so called white liquor) at a temperature of above 100 °C, for example at a temperature between 140 and 180 °C. The white liquor solubilises lignin and hemicellulose to form the so called black liquor, which is separated from cellulose. Black liquor is thus a liquid lignin product obtainable from the treatment of a lignocellulosic biomass with the Kraft process.

The lignin in Kraft black liquor is usually burnt in the recovery boiler at mills, thus providing the energy needed for further pulping. However, the present inventors have surprisingly found that black liquor can be employed as a lignin product in the process of the present invention. Furthermore, the black liquor can be employed directly, i.e. without any treatment or modification, in the process of the present invention. Thus, in an embodiment, the black liquor is neither dried nor concentrated prior to subjecting it to step c) of the present invention. In another embodiment, the black liquor is dried or concentrated in order to increase the lignin concentration therein prior to subjecting it to step c) of the present invention.

Alternatively, the solubilized lignin in black liquor can be precipitated from the black liquor, for example by addition of any pH decreasing acidifying agent, such as sulfuric acid or carbon dioxide, to the black liquor, and then isolated by means of filtration and/or centrifugation. Lignin thus obtained is referred to as Kraft lignin. Kraft lignin products are lignin products that consist of lignin, or comprise at least 80% lignin, preferably at least 90% lignin, or more preferably at least 95% lignin by weight with respect to the total weight of the lignin product.

The sulfite process on the other hand involves treatment of the lignocellulosic biomass with sulfite or bisulfite salt solutions such as aqueous solutions. In these salts the counterion is typically an alkaline earth metal (e.g. calcium, magnesium) or an alkali metal (e.g. sodium, potassium) or ammonium. The sulfite process is generally carried out at a temperature of above 100 °C, for example at a temperature between 130 and 160 °C. The sulfite or bisulfite salt solution solubilizes lignin and hemicellulose to form the so called brown liquor (also known as red liquor, thick liquor or sulfite liquor), which is separated from cellulose. Lignin can then be separated from hemicellulose by acidification to precipitate lignin, and the precipitated lignin is recovered by means of filtration and/or centrifugation. Brown liquor is thus a liquid lignin product obtainable from the treatment of a lignocellulosic biomass with the sulfite process.

The organosolv pulping process is also known as a means for fractionating biomass and recovering lignin. Organosolv pulping involves contacting a lignocellulosic biomass with an aqueous organic solvent at temperatures ranging from 140 to 220 °C to solubilize lignin and hemicellulose, the organics solvent then being separated from cellulose. Solvents used include acetone, methanol, ethanol, butanol, ethylene glycol, formic acid and acetic acid. Lignin can then be separated from hemicellulose by acidification to precipitate lignin, and the precipitated lignin is recovered by means of filtration and/or centrifugation. Such lignin is known as organosolv lignin.

Other methods of lignocellulosic biomass fractionation are known in the art and are described, for example, in US 2013/0145995 A1.

Subsequently, in step a) of the invention, the lignin product of the preliminary step, or more specifically the lignin in the lignin product of the preliminary step is dissolved or suspended in a solvent to respectively provide a solution or suspension. In the context of the present invention, the solution or suspension includes solutions or suspensions wherein the lignin in the lignin product is partially dissolved or suspended.

In an embodiment, the lignin in the lignin product is dissolved or suspended in dioxane, acetic acid, THF, DMSO, DMF, an alcohol such as methanol or ethanol, water or a mixture thereof. Preferably, the lignin in the lignin product is dissolved or suspended in an alcohol such as methanol or ethanol, water or a mixture thereof. In a most preferred embodiment, the lignin in the lignin product is dissolved or suspended in water. The degree of dissolution or suspension of the lignin in water can be adjusted by means known by the person skilled in the art, such as by adjusting the temperature of the water, a higher temperature providing higher dissolution. The choice of lignin product can also affect the solubility of the lignin in the solution or suspension.

In an embodiment, where the lignin product of the preliminary step or the lignin in the lignin product of the preliminary step is already in the form of a solution or suspension, it may either be employed as the lignin solution or suspension of step a), or it may be further processed (e.g. further diluted) to provide a new solution or suspension. This is for instance the case with black liquors. The dissolution or suspension of the lignin product of the preliminary step can be advantageous where lignin product flow problems are encountered or expected in apparatuses wherein the process of the invention is carried out or to be carried out.

In a preferred embodiment, a base is added to the solution or suspension of step a). The base is preferably an alkali metal hydroxide or an alkali metal bicarbonate. Preferred alkali metals are sodium or potassium, more preferably sodium. A most preferred base is sodium hydroxide.

In an especially preferred embodiment, the solution or suspension resulting from step a) is an aqueous solution or suspension which comprises sodium hydroxide or sodium bicarbonate, preferably sodium hydroxide.

The addition of the base can be carried out after preparing the solution or suspension of the lignin product; or the base can be added to the dissolving or suspending medium prior to dissolving or suspending the lignin product; or the base can be added to the lignin product prior to dissolving or suspending.

The concentration of base in the solution or suspension resulting from step a) is generally low and depends on the means by which step b) is carried out, in particular the means by which the temperature increase in step b) is carried out. Said concentration of base is preferably one which is between 0.01 M and 2 M, preferably between 0.1 and 0.5 M, at a point in time when the solution or suspension reaches the temperature described in step b), namely a temperature of from 350 to 430 °C. This is because the temperature increase of step b) can be effected by addition to the solution or suspension resulting from step a) of a fluid (such as water), thus leading to a dilution of the base. The skilled person knows how to select the appropriate base concentrations in the solution or suspension resulting from step a) and the appropriate amount of temperature-increasing fluid of step b) to arrive at the desired base concentration in step b). In an embodiment, the concentration of base in the solution or suspension resulting from step a) is between 0.1 M and 5 M.

If the temperature increase in step b) is effected not by addition of a fluid (i.e. not by dilution), then the concentration of base in the solution or suspension resulting from step a) is generally the same as that in step b) at the point in time when the solution reaches the temperature of from 350 to 430 °C, allowing for an up to 20% increase in concentration due any to solvent evaporation that may occur.

As regards the concentration of lignin in the solution or suspension resulting from step a), this again depends on whether or not a fluid is added to exert the temperature increase in step b). Other parameters such as flow rate or tubing/reactor volume in continuous flow setups can also be considered, for instance where tubing or reactors can suffer from clogging, then lower lignin concentrations can be employed. In an embodiment, the concentration of lignin in the solution or suspension resulting from step a) is between 10 and 0.1% by weight with respect to the total weight of the solution or suspension. In another embodiment, said concentration is between 5 and 0.1 % by weight with respect to the total weight of the solution or suspension. In another embodiment, said concentration is between 2 and 0.3% by weight with respect to the total weight of the solution or suspension. Alternatively, the concentration of lignin in the solution or suspension resulting from step a) is one which leads to a concentration of lignin of between 0.01 and 1%, or of between 0.1 and 0.5%, with respect to the total weight of the solution or suspension, at a point in time when the solution or suspension reaches the temperature described in step b), namely a temperature of from 350 to 430 °C.

The point in time when the solution or suspension reaches the temperature described in step b) is for instance in continuous flow setups the point in time at which the solution or suspension enters the reactor.

Step b) of the process of the present invention involves bringing the solution or suspension resulting from step a) to a temperature of from 350 to 430 °C and to a pressure of at least 220 bar, and maintaining, simultaneously, said pressure and temperature. The solution or suspension resulting from step a) is at a temperature and pressure below the temperature and pressure to which it is brought in step b). Preferably, the solution or suspension resulting from step a) is at a temperature below 300 °C, more preferably below 150 °C, more preferably it is at room temperature (20-25 °C).

In an embodiment, the solution or suspension resulting from step a) is firstly brought to a temperature of from 350 to 430 °C, and then to a pressure of at least 220 bar. In another embodiment, the temperature and pressure increase can totally or partially coincide in time. In a preferred embodiment, the solution or suspension resulting from step a) is firstly brought to a pressure of at least 220 bar, and then to a temperature of from 350 to 430 °C. Whilst such a temperature alone can induce undesired reactions of the lignin in the solution or suspension resulting from step a), such a pressure alone does not typically induce said undesired reactions, or does so to a far lesser extent.

The solution or suspension resulting from step a) is brought to a pressure of at least 220 bar. In another embodiment the pressure is between 220 and 500 bar, or between 220 and 400 bar, or between 220 and 300 bar. Preferably, it is between 255 and 275 bar.

The solution or suspension resulting from step a) is brought to a temperature of from 350 to 430 °C. In another embodiment, the temperature is from 370 to 430 °C. In another embodiment, the temperature is from 370 to 405 °C. In another embodiment, the temperature is from 370 to 395 °C. In another embodiment, the temperature is from 370 to 390 °C. Preferably, the temperature is from 383 to 389 °C.

It is understood that any and each combination of the above preferences for pressure and temperature ranges is also preferred. For example, a pressure between 220 and 500 bar, or between 220 and 400 bar, or between 220 and 300 bar in combination with a temperature of 370 to 395°C are also specific embodiments of the present invention.

In a preferred particular embodiment, the solution or suspension resulting from step a) is brought to a pressure of between 255 and 270 bar, and to a temperature of from 383 to 389 °C.

Preferably, the bringing of the temperature of the solution or suspension resulting from step a) to a temperature of from 350 to 430 °C (or to any of the above recited temperatures) is carried out as quickly as possible. This is because time is an important factor in the depolymerization of lignin. The present inventors have observed that lignin undergoes several depolymerization-repolymerization processes which can occur within seconds, or even within the second. Therefore, a precise control over reaction time has proven important in the context of the present invention. The slower the target temperature is attained, the more lignin in the solution or suspension starts reacting before the target temperature and pressure is attained, thus negatively impacting on the yields of the desired lignin depolymerization products.

Thus, the temperature increase from the temperature at which the solution or suspension resulting from step a) is, to the temperature of from 350 to 430 °C preferably occurs within 150 ms (i.e. at most 150 ms), more preferably within 100 ms, more preferably within 50 ms, more preferably within 10 ms, even more preferably within 3 ms.

In particular embodiments, the temperature increase occurs between a time of 0.1 and 150 ms, more particularly between 0.1 and 100 ms, more particularly between 0.1 and 50 ms, more particularly between 0.1 and 10 ms, more particularly between 0.1 and 3 ms.

In preferred particular embodiments, the temperature increase occurs between a time of 1 and 150 ms, more particularly between 1 and 100 ms, more particularly between 1 and 50 ms, more particularly between 1 and 10 ms, more particularly between 1 and 3 ms.

In particular embodiments, the temperature increase occurs between a time of 3 and 150 ms, more particularly between 3 and 100 ms, more particularly between 3 and 50 ms, more particularly between 3 and 10 ms.

This temperature increase can be carried out by means know to the person skilled in the art. In a preferred embodiment, the temperature increase within these timeframes is effected by adding to the solution or suspension resulting from step a) a fluid (most preferably water) which is at a temperature higher than from 350 to 430 °C, or more specifically higher than whichever specific temperature or temperature range is selected from said 350 to 430 °C range. The higher the temperature of the fluid added in step b), the quicker the temperature of from 350 to 430 °C is attained, but the higher the risk of side-reactions is. Thus, the temperature of the fluid added in step b) is preferably between 400 and 500 °C, provided that the temperature of the added fluid is higher than whichever specific temperature or temperature range is selected from said 350 to 430 °C range.

The pressure increase of step b) need not be as quick as the temperature increase of step b).

Step b) then involves maintaining the lignin solution or suspension brought to the desired temperature and pressure (as described in any of the above embodiments) at said temperature and pressure for a time of between 40 and 450 ms (milliseconds). The present inventors have surprisingly found that an ultra-fast and efficient depolymerization of lignin takes place within this timeframe at the specified temperature and pressure. Under said times, small amounts of the desired products (phenolic oligomers and monomers) are obtained, and above said times lignin repolymerization and char formation events start competing with lignin depolymerization. This finding allows attaining desired product yields in times far below those considered necessary in the prior art.

In an embodiment, the desired temperature and pressure maintenance is for a time of between 100 and 425 ms. In another embodiment, it is for a time of between 100 and 400 ms. In another embodiment, it is for a time of between 100 and 375 ms. In another embodiment, it is for a time of between 100 and 350 ms. In another embodiment, it is for a time of between 125 and 425 ms. In another embodiment, it is for a time of between 125 and 400 ms. In another embodiment, it is for a time of between 125 and 375 ms. In another embodiment, it is for a time of between 125 and 350 ms. In another embodiment, it is for a time of between 150 and 425 ms. In another embodiment, it is for a time of between 150 and 400 ms. In another embodiment, it is for a time of between 150 and 375 ms. In another embodiment, it is for a time of between 150 and 350 ms.

In a preferred embodiment, the solution or suspension resulting from step a) is an aqueous solution or suspension to which a base, in particular a base as described above, has not been added, and which in step b) is maintained at the desired temperature and pressure (as described in any of the above embodiments) for a time between 140 and 320 ms.

In another preferred embodiment, the solution or suspension resulting from step a) is an aqueous solution or suspension comprising a base as described above, and which in step b) is maintained at the desired temperature and pressure (as described in any of the above embodiments) for a time between 140 and 370 ms, preferably between 210 and 370 ms.

As soon as the desired maintenance time of step b) has elapsed, the temperature and pressure of the depolymerized lignin solution are rapidly reduced. Again, this is to ensure an accurate control over the depolymerization reaction and to avoid or reduce to a minimum any subsequent lignin repolymerization or char formation event. Therefore, temperature and pressure decrease times as low as possible are desired.

In an embodiment, a temperature reduction of between 125 and 300 °C, is effected in a time of at most 300 ms, or at most 100 ms, or preferably at most 10 ms, or more preferably at most 1 ms. In particular embodiments, this temperature reduction is effected in a time of between 0.1 and 300 ms, or of between 0.1 and 100 ms, or preferably of between 0.1 and 10 ms, or more preferably of between 0.1 and 1 ms. In preferred particular embodiments, this temperature reduction is effected in a time of between 0.01 and 300 ms, or of between 0.01 and 100 ms, or preferably of between 0.01 and 10 ms, or more preferably of between 0.01 and 1 ms. In other embodiments, these times apply but the temperature reduction is of between 200 and 300 °C.

In an embodiment, a pressure reduction of 100 bar or more is effected in a time of at most 300 ms, or at most 100 ms, or preferably at most 10 ms, or more preferably at most 1 ms. In particular embodiments, this pressure reduction is effected in a time of between 0.1 and 300 ms, or of between 0.1 and 100 ms, or preferably of between 0.1 and 10 ms, or more preferably of between 0.1 and 1 ms. In preferred particular embodiments, this pressure reduction is effected in a time of between 0.01 and 300 ms, or of between 0.01 and 100 ms, or preferably of between 0.01 and 10 ms, or more preferably of between 0.01 and 1 ms. In other embodiments, these times apply, but the pressure reduction is of between 100 and 300 bar, or of between 100 and 270 bar, and more preferably it is a pressure reduction down to atmospheric pressure.

Preferably, these degrees and times of decompression and cooling are carried out simultaneously. This can be achieved for instance by flash evaporation, or in continuous flow setups through the use of a high temperature decompression valve. These degrees and times of simultaneous decompression and cooling can be achieved through any means making use of the Joule-Thompson thermodynamic effect.

In an embodiment, the decompressed and cooled depolymerized lignin mixture is then further cooled, preferably to room temperature, and/or decompressed, preferably to atmospheric pressure, after step b) and, if oligomeric and/or monomeric phenolic compounds are to be isolated or purified from said mixture, before isolating or purifying the oligomeric and/or monomeric phenolic compounds.

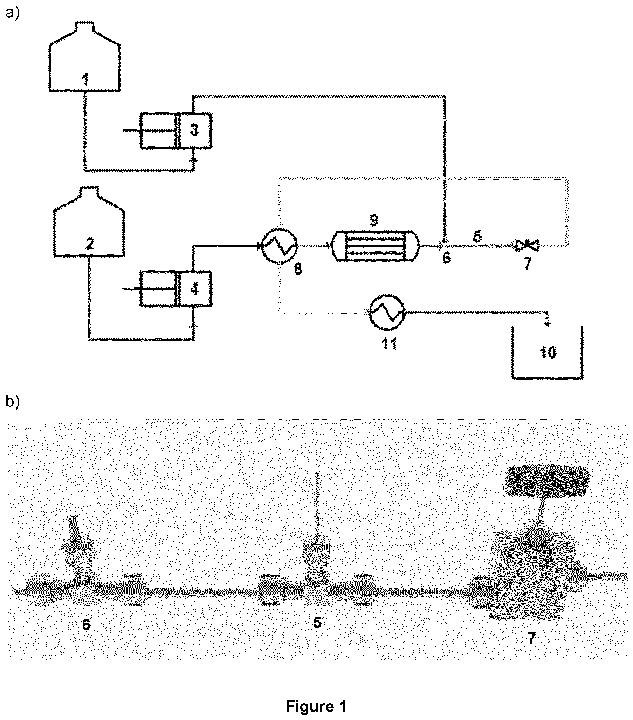

In a preferred embodiment, the process of the present invention is a continuous flow process, which is advantageously suited to the implementation of the process of the invention in an industrial setting. Flow rates of the different components of the process of the invention, in particular of the lignin solution or suspension resulting from step a) and of any fluid employed to bring said solution or suspension to the temperature of step b), can be adjusted by the person skilled in the art, such that the desired temperature increase, maintenance and/or decrease times are achieved within the timeframes mentioned hereinabove. Examples 1, 2 and 3 describe such a continuous process. Figure 1 schematically depicts a system for carrying out such a continuous process.

In a preferred continuous flow embodiment, the solution or suspension of step a) is prepared in a tank or reservoir (1), the latter being in fluid communication with an input end of a reactor (5). The depolymerization of step b) takes place in the reactor (5)

In a preferred continuous flow embodiment, the reactor (5) comprises or is coupled to, at its output end, means (7) for effecting the sharp cooling and decompression according to the present invention, such as a high temperature decompression valve. The reactor is provided at said output end with discharge means for discharging the decompressed and cooled depolymerized lignin mixture (10). In an embodiment, the decompressed and cooled depolymerized lignin mixture is further cooled, such as with a cooler (11) and/or decompressed.

Where the temperature increase of step b) is carried out by addition of a hot fluid, the reactor further comprises or is coupled to, at its input end, mixing means (6) such as a T- or Y-junction, where the solution or suspension resulting from step a) and the hot fluid meet and then enter the reactor. The hot fluid can be supplied to the reactor from a tank or reservoir (2). Thus the tank or reservoir (1) is in fluid communication with a first entry port of the mixing means (6), and the tank or reservoir (2) is in fluid communication with a second entry port of the mixing means (6).

In a continuous flow embodiment, the solution or suspension of step a) in the tank or reservoir is pumped towards the reactor by means of a first pump (3). In a continuous flow embodiment, the hot fluid is pumped towards the reactor by means of a second pump (4). In a continuous flow embodiment, the hot fluid is initially not hot, and is heated to the desired hereinabove mentioned temperatures as it is being pumped towards the reactor, for instance by the use of heat exchangers (8) or heaters (9) past which the fluid flows.

In a preferred continuous flow embodiment, these continuous flow embodiments are combined, except where embodiments are mutually exclusive. The person skilled in the art is aware of parameters and means for implementing and modulating such a continuous flow system. For instance, fluid communication may be achieved through the use of tubing of the appropriate length, diameter and material, which will generally be chosen based on the amount of material to be depolymerized and the nature of the material itself, as well as the flow rate which is desired. Flow rates in turn can further be controlled by the pumps employed, or the length and diameter of the reactor and/or mixing or cooling/decompression means employed. The process of the invention may be for instance carried out in a system such as that described in Cantero, Bioresource Technology, 2013, 135, 697-703.

The present inventors have advantageously found that the depolymerization process of the present invention (steps a) to b)) can be efficiently carried out by employing only water (in the presence or absence of base as described hereinabove), in particular by employing only water as the dissolving or suspending medium for the lignin in the lignin product and/or as the fluid for achieving the temperature increase of step b). Thus, in a particular embodiment the depolymerization process of the present invention is carried out in the absence of acid. In another particular embodiment it is carried out in the absence of a non-base catalyst, and more particularly it is carried out in the absence of a metal catalyst, thus providing a clean lignin depolymerization process. In an embodiment, the metal catalyst comprises a transition metal, in another embodiment the metal catalyst comprises a noble metal, and in another embodiment the metal catalyst comprises Si, Al, Zr, Fe, Pt, Pd, Ni, La, Ce, Mo, Ru or Cu. In another particular embodiment the depolymerization process of the present invention is carried out in the absence of a biocatalyst. In another embodiment, the depolymerization process of the present invention is carried out in the absence of an ionic liquid, such as those comprising an alkylimidazolium (e.g. methylimidazolium) moiety. In another embodiment, the depolymerization process of the present invention is carried out in the absence of a capping agent. Capping agents are well known in the field of the present invention as compounds which are able to prevent or minimize the repolymerization of depolymerized lignin. In an embodiment, the capping agent is a capping agent other than a base as used in step a) of the present invention. In a particular embodiment, the capping agent is an ester. In another particular embodiment it is a silylating agent. In another particular embodiment, the capping agent is a cresol, more particularly p-cresol.

The process of the present invention can comprise a final step of isolating or purifying the oligomeric and/or monomeric phenolic compounds from the depolymerized lignin mixture. In an embodiment, said final step comprises isolating from the depolymerized lignin mixture a mixture which has a higher amount of the oligomeric and monomeric phenolic compounds than the depolymerized lignin mixture. In an embodiment, said final step comprises isolating from the depolymerized lignin mixture a mixture which comprises not less than 5%, not less than 10%, not less than 15%, not less than 20%, not less than 25%, not less than 30%, not less than 35%, not less than 40%, not less than 45%, or not less than 50% by weight of oligomeric and monomeric phenolic compounds, or preferably of monomeric phenolic compounds, with respect to the total weight of the isolated mixture. In an embodiment, the isolated mixture is an oil, and more particularly it is the first phenolic oil described hereinafter. Oligomeric and/or monomeric phenolic compounds in the isolated mixture can generally be isolated or quantified by standard purification methods known to the skilled person, such as those described in the experimental section hereinafter.

The isolation or purification of the oligomeric and/or monomeric phenolic compounds from the depolymerized lignin mixture can be achieved for instance by adding an acid (11) to the decompressed and cooled depolymerized mixture (12) to obtain a first liquid phase (13) and a first solid phase (14). The first liquid phase comprises the greatest part of the phenolic oligomers and/or phenolic monomers.

The acid is preferably a mineral acid, such as sulphuric acid. The acid is preferably added dropwise to the decompressed and cooled depolymerized mixture. The acid is preferably added to the decompressed and cooled depolymerized mixture until the pH of said depolymerized mixture is between 1 to 4, preferably about 2.

In an embodiment, where the decompressed and cooled depolymerized mixture resulting from step b) already contains a first liquid phase (13) and a first solid phase (14), the addition of acid in step c) can be omitted. The decompressed and cooled depolymerized mixture resulting from step b) typically already contains a first liquid phase (13) and a first solid phase (14) when the pH of the mixture is acidic, i.e. under pH 7, for instance when it is at pH 6 or lower. This can be the case where a base is not added to the solution or suspension of step a).

The first liquid phase and the first solid phase are preferably then separated, preferably by centrifugation followed by removal of the first liquid phase.

In a preferred embodiment, in order to further purify the phenolic oligomers and/or phenolic monomers, the separated first liquid phase is extracted with an organic solvent, such as ethyl acetate or DCM to obtain a first final organic phase (15) and a final aqueous phase (16). It is the first final organic phase which contains the phenolic oligomers and/or phenolic monomers. The first final organic phase can be evaporated and/or dried to remove the organic solvent therefrom, which typically results in an oil highly pure in phenolic oligomers and/or phenolic monomers (herein referred to as the first phenolic oil). By employing the process of the present invention, yields of first phenolic oil as high as 75% by weight with respect to the weight of lignin in the initial lignin product can be achieved.

In a preferred embodiment, the extraction of the first liquid phase is repeated, for example once, twice or thrice.

The amount of phenolic monomers in the first phenolic oil can be higher than that observed for other lignin depolymerization products in the art. Thus, the present invention also refers to a product, in particular an oil, which comprises between 5 and 50% weight phenolic monomers with respect to the total weight of the product, or in particular of the oil. In another embodiment said weight of phenolic monomers is between 5 and 25%, or between 5 and 20%. In another embodiment said weight of phenolic monomers is between 10 and 50%, or between 10 and 25%, or between 10 and 20%. In another embodiment said weight of phenolic monomers is between 15 and 50%, or between 15 and 25%, or between 15 and 20%. The expression "weight of phenolic monomers" refers to the sum of all phenolic monomers in the product, in particular in the oil. In an embodiment "weight of phenolic monomers" refers to more than one phenolic monomer. In an embodiment, the product, or in particular the oil, comprises two, three, four or five phenolic monomers selected from guaiacol, creosol, vanillin, acetovanillone, homovanillic acid, syringol and syringaldehyde, and the combined weight of said two, three, four or five phenolic monomers with respect to the total weight of the product, or in particular the oil, is any of those specified above in this paragraph. The present invention also refers to the use of said product, or in particular oil, in cosmetic or food products.

The final aqueous phase typically contains inorganic salts produced during the process of the invention.

In an embodiment, the separated first solid phase is optionally washed with water, for example once, twice or thrice. The optionally washed separated first solid phase is then extracted with an organic solvent, such as ethyl acetate or DCM to obtain a second final organic phase (17) and a final solid phase (18). The extraction can be repeated, for example once, twice or thrice. The second final organic phase can be evaporated and/or dried to remove the organic solvent therefrom to obtain a second phenolic oil. The second phenolic oil contains phenolic oligomers and/or phenolic monomers to a lesser degree and in an impurer form as compared to the first phenolic oil, but may nevertheless be further processed to purify the phenolic oligomers and/or phenolic monomers. It should be noted that the amount of phenolic oligomers and/or phenolic monomers in the second phenolic oil has not been incorporated in the calculation of the above stated first phenolic oil yields.

The further processing of the first solid phase is typically not carried out when no base has been added to the solution or suspension of step a) of the invention.

The final solid phase typically contains residual lignin and char produced during the process of the invention.

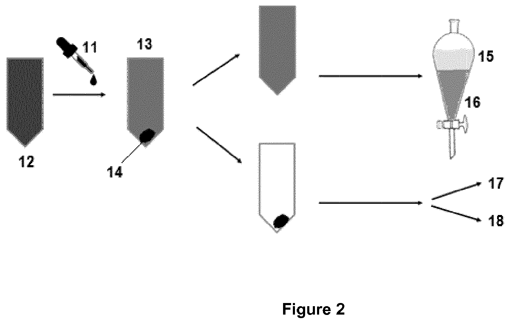

A phenolic oligomer and/or phenolic monomer isolation process according to the present invention is depicted in Figure 2.

In a preferred embodiment, the isolation of the phenolic oligomers and/or phenolic monomers is also carried out as a continuous flow process.

In another embodiment, any of the phenolic oligomers and/or phenolic monomers is isolated from the phenolic oil. This can be achieved by standard purification techniques known to the skilled person.

In another aspect of the invention, the present invention refers to a product obtainable by any of the process embodiments of the present invention.

Unless expressly stated, the terms used herein are intended to have the plain and ordinary meaning as understood by those of ordinary skill in the art.

The following examples are provided for the purpose of illustrating, not limiting, the invention.

### Example 1: Continuous process for the depolymerization of lignin in the absence of base

### Materials

The lignin used was Kraft lignin (CAS 8068-05-1) from Sigma-Aldrich. This lignin was chosen due to its good water solubility. Distilled water was used as the reaction medium to run the experiments.

### Method

The continuous process used to carry out the lignin depolymerization was that schematically depicted in Figure 1. The depolymerization was carried out at temperatures between 300 °C to 400 °C (300, 370, 386 and 400 °C ±2.1 °C) and a pressure of 260 ± 8.1 bar, with reaction times between 60 ms and up to 4.6 s. The reaction time was controlled by changing the input flow to the reactor and the reactor volume. The feeding lignin concentration was 0.3% w/w (0.1±0.02 % w/w at reactor input). This low concentration was chosen to minimize the chances of clogging problems in the high temperature valve used for the decompression. The water flow was varied from 3.5 L/h to 5.1 L/h and the lignin solution flow was varied from 1.6 to 2.5 L/h at the operating pressure of 260 bar. Different reactors were made with volumes between 0.5 and 12.3 cm³. The reaction was stopped by sharp temperature reduction using the high temperature valve. Once the reaction finished, the depolymerized mixture was further processed in order to recover the different products formed and contained therein. Firstly, a first solid phased contained in the mixture was separated from a first liquid phase by centrifugation (10 min, 7000 rpm). The first liquid phase was recovered carefully by pipette without disturbing the solid. Then, the wet solid was washed with milli-Q water and dried in an oven at 45 °C, obtaining the first solid phase in dry form. The first liquid phase was subjected to a liquid-liquid extraction process with ethyl acetate to give a first final organic phase and a final aqueous phase. The ethyl acetate was evaporated from the first final organic phase to give the first phenolic oil, which is the product of interest of the present invention.

### Results

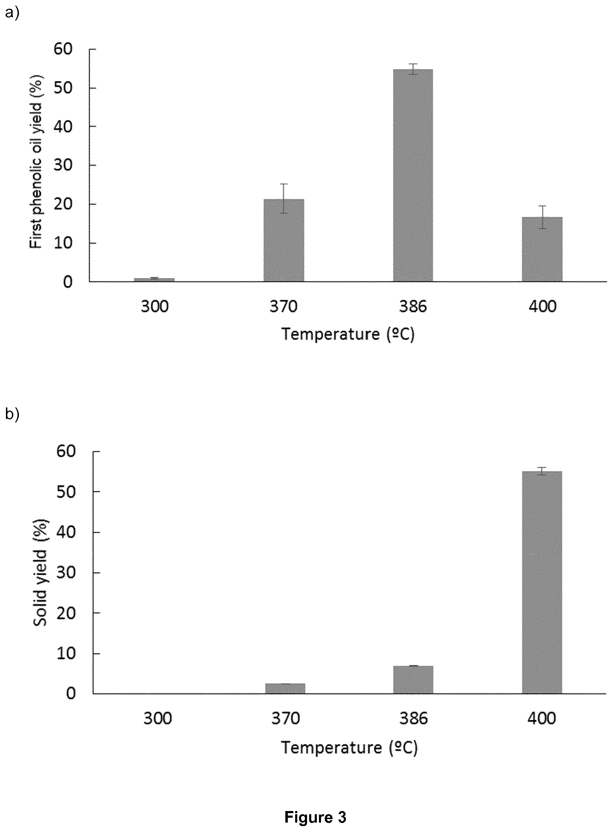

The effect of temperature on the yields at a constant reaction time of 170 ms was studied at temperatures of 300, 370, 386 and 400 °C. As can be seen in Figure 3a, at 300 °C the yield of first phenolic oil was negligible, indicating that depolymerization had hardly taken place. Then, the oil yield increased dramatically up to 54.8% at 386 °C. At 400 °C, the yield was reduced drastically (16.6%). In accordance with these results, the yield of final solid phase (char and residual lignin) was 7.0% at 386 °C but increased greatly to 55.1% at 400 °C, as can be observed at Figure 3b).

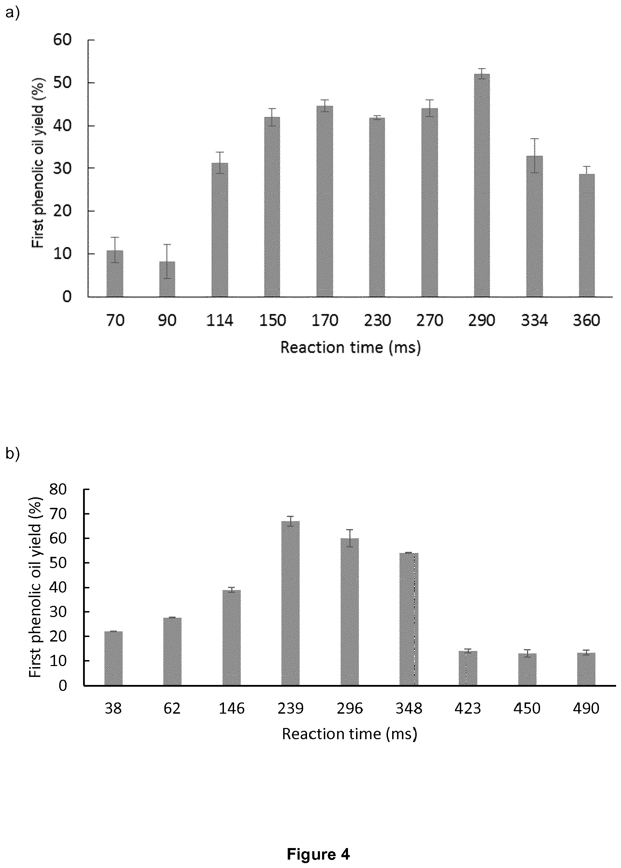

After unexpectedly finding that high first phenolic oil yields could be achieved at a time under the second, in particular under half a second, the effect of reaction times between 70 and 360 ms was investigated. In Figure 4a it can be observed that the first phenolic oil yield in fact peaked at 290 ms, reaching 52.1%), and then decreased dramatically, presumably because of the recondensation reactions occurring at longer times. With regard to the final solid phase formation, it was less than 7% at all timepoints beyond 90 ms. At 90 ms, residual lignin was the main product (12.3%). It was thus surprisingly found that a major first depolymerization can be induced under half a second, in clear contradiction to prior art assumptions such as those of Matsumara *et al.*

### Example 2: Continuous process for the depolymerization of lignin in the presence of base

### Materials

Materials employed were the same as those in Example 1. Sodium hydroxide technical grade pellets were acquired from Panreac, and were used in solution in distilled water. The calibration standards used in the GC/MS analysis (guaiacol, vanillin, acetovanillone, homovanillic acid and creosol) and the internal standard (2-phenyl ethanol) were purchased from Sigma-Aldrich (USA). The ethyl acetate for carrying out the liquid-liquid extractions and the acetone used as solvent to analyze by GC/MS were also purchased from Sigma-Aldrich.

### Method

The continuous process used to carry out the lignin depolymerization was that schematically depicted in Figure 1. In this study, the depolymerization was carried out at 386 ± 2.6 °C and 260 ± 5 bar with reaction (depolymerization) times of 38-490 ms. The reaction time was controlled by changing the inlet flow to the reactor and the reactor volume. The flows were varied between 1.4-2.6 L/h for the aqueous NaOH lignin solution, and 3.4-4.4 L/h for the water employed to bring the lignin solution to 386 °C. Two reactors were employed with volumes of 1.15 and 0.64 cm³, each coupled at their input end to a T junction in which the hot water and the basic lignin solution were mixed, and further comprising another T junction with a thermocouple to measure the reactor temperature, and a high temperature decompression valve at the output end of the reactor. The lignin concentration at the input end of the reactor was 5000 ppm (0.5% w/w) in a basic solution of NaOH at pH 13 (0.2 M).

Once the reaction finished the depolymerized mixtures were treated in order to simplify the analysis. A procedure was developed to separate the mixture into four phases. The scheme of this procedure is shown in Fig.2. Firstly, the depolymerized mixture was acidified by adding concentrated H₂SO₄ (96%) dropwise until the solution was at pH 2 to give a brown suspension. Then, the sample was centrifuged for 10 minutes at 7000 rpm to give a clear yellow liquid (the first liquid phase) on top of a dark brown solid (the first solid phase). The first liquid phase was recovered carefully by pipette without disturbing the solid and the wet solid was shaken with H₂O at pH 2 three times. The first solid phase was extracted three times with ethyl acetate (1:1 volume of sample/volume of ethyl acetate used in each extraction) to give a second final organic phase and a final solid phase. The solvent in the second final organic phase was evaporated with a rotary evaporator at 40 °C and was dried in an oven at 50 °C to give the second phenolic oil. The water of the final solid phase was eliminated with a rotary evaporator at 80 °C and dried in an oven at 50 °C. The first liquid phase was extracted three times with ethyl acetate (1:1.25 volume of the sample/volume of ethyl acetate used in each extraction) to give the first final organic phase and the final aqueous phase. The solvent was evaporated from the first final organic phase with a rotary evaporator at 40 °C and dried in an oven at 50 °C to give the first phenolic oil. Finally, the water was removed from the final aqueous phase in a rotary evaporator at 80 °C and dried in an oven at 50 °C. The main product of interest in this study was the first phenolic oil. The final aqueous phase contained the salts formed (Na₂SO₄) during the sulfuric acid addition in order to precipitate the solid fraction.

### Characterization of the products

The products obtained after the fractionation procedure were analysed by different techniques. The first phenolic oil was characterized in order to establish the nature of the phenolic compounds. For this purpose, the oil was analysed by a gas chromatograph equipped with a quadrupole mass spectrometer detector (5977A-Agilent Technologies, USA). Data of the chromatographic separations were acquired using a capillary column HP-5ms, 30 m x 0.250 mm x 0.25 µm (Agilent Technologies, USA). The equipment was in splitless mode. The oven temperature was programmed as follows: initial temperature was set at 32 °C and kept for 10 min, then temperature was raised to 52 °C at 2 °C/min, and kept for 2 min; to 65 °C at 2 °C/min, and kept for 2 min; to 93 °C at 4 °C/min, and kept for 2 min; to 230 °C at 2 °C/min and kept for 3 min; and finally, to 300 °C at 15 °C, and kept for 3 min. To eliminate the acquisition of the solvent (acetone) by the MS, a solvent delay was programed at 3.70 minutes after confirming that no compounds were removed with the solvent. For compound identification, the data obtained in the GC-MS analysis were compared with m/z values compiled in the spectrum library Wiley. Data analysis was performed using the Agilent MassHunter software (Agilent Technologies, USA). Validation of compound identification was carried out by comparison of their MS spectra and their retention times with standards. Quantification was carried out using standard calibration curves with a polynomial fit for guaiacol (100-800 ppm), vanillin (100-500 ppm), acetovanillone (100-500 ppm), homovanillic acid (100-500 ppm) and creosol (100-500 ppm). In order to eliminate instrumental variations, the peak area of each compound was normalized to the peak area of the internal standard, 2-phenyl ethanol (70 ppm). The normalized values were used for data analysis.

### Results

The yield of first and second phenolic oils was analysed at different timepoints. As can be seen in Figure 4b the yield of first phenolic oil increased with reaction time until reaching a maximum of 67% at 239 ms, and it decreased drastically after 348 ms, from 54% to a constant value of oil production of 12-14% at the higher reaction times. These results are in accordance with those observed for Example 1.

The following table shows the first phenolic oil composition at different depolymerization times. Values are weight % over the weight of the first phenolic oil.

| | **Reaction time (ms)** | | | | | | | | |
|---|---|---|---|---|---|---|---|---|---|
| **Compound** | **38** | **62** | **146** | **239** | **296** | **350** | **423** | **450** | **490** |
| Guaiacol | 0.00 | 1.91 | 0.61 | 1.07 | 3.89 | 2.56 | 0.00 | 1.92 | 0.64 |
| Creosol | 0.00 | 0.97 | 0.20 | 0.37 | 1.98 | 1.00 | 0.00 | 1.23 | 0.56 |
| Vanillin | 1.54 | 1.03 | 0.53 | 0.96 | 4.14 | 0.91 | 0.82 | 2.65 | 1.77 |
| Acetovanillone | 1.85 | 1.30 | 0.60 | 0.84 | 3.31 | 1.31 | 1.72 | 0.11 | 2.43 |
| Homovanillic acid | 4.72 | 2.07 | 1.07 | 1.55 | 4.23 | 1.71 | 3.04 | 1.23 | 2.51 |
| **Total** | 8.12 | 7.28 | 3.01 | 4.78 | 17.55 | 7.49 | 5.58 | 7.14 | 7.90 |

It is important to note that in addition to these compounds, other compounds in a minor amount were also detected, such as 5-methylguaiacol, 4-ethylguaiacol, 4-vinylguaiacol, syringol, eugenol, isoeugenol, homovanillyl alcohol, propiovanillone, acetosyringone, syringaldehyde or dehydrozingerone. It was also observed that the amount of phenolic monomers isolated was greater than that obtained in Example 1. Thus, it has been surprisingly found that the use of NaOH favoured depolymerization selectivity towards phenolic monomers.

As regards the second phenolic oil, it is composed mainly of monomers also presented in the first phenolic oil, but in a minor amount. It is hypothesized that these are just monomers remaining in the first solid phase that could not be separated from the solid in the centrifugation and washing steps.

### Example 3: Continuous process for the depolymerization of black liquor in the presence of base

### Materials

The black liquor used was obtained from eucalyptus wood and comprised 14% weight lignin with respect to the weight of the black liquor. Rest of materials were as specified for Example 2.

### Method

The procedure followed was similar to that described for Examples 1 and 2. A 0.5 M NaOH solution was prepared, and the black liquor was dissolved therein until a 1.2% w/w lignin solution was attained. Depolymerization parameters were as follows: 386 ± 2.6 °C, 260 ± 5 bar and 300 ± 8 ms.

### Results

The first phenolic oil was obtained in a yield of 51.3% by weight with respect to the amount of lignin in the lignin solution at the reactor input. The first phenolic oil composition is shown in the following table. Values are weight % over the weight of the first phenolic oil.

| **Compound** | **Yield % w/w** |
|---|---|
| Guaiacol | 2.7 |
| Vanillin | 0.6 |
| Acetovanillone | 1.6 |
| Syringol | 3.0 |
| Creosol | 0.8 |
| Syringaldehyde | 2.2 |

### Example 4: Determination of Structural Composition of Biomass

### Cellulose and hemicellulose content

The structural composition of biomass can be determined by extracting the cell wall of biomass and analyzing the content of cellulose, hemicellulose, and lignin. Samples are dried and milled to 212-500 µm size. The plant material is homogenized in 80 % (v/v) ethanol using a Polytron Homogenizer (Fisher, USA) at high speed for 2-3 minutes. Homogenate is heated for 1 hour at 80 °C, cooled down to room temperature, and centrifuged at 12000 times gravity (G) for 30 minutes. Pellets are resuspended in 80% ethanol, and the procedure is repeated. Pellets are washed three times with 85% acetone, and air dried. Dry pellets are suspended in 0.5% aqueous sodium dodecyl sulfate (SDS) overnight. The residue is recovered and washed with water by filtration, washed with a 1:1 mixture of chloroform and methanol, rinsed with acetone, and air-dried. The resulting cell wall material (CW) is analyzed.

The cellulose content is determined by treatment of CW (10 mg) with acetic-nitric reagent (80% acetic acid:concentrated nitric acid, 10:1). Unhydrolyzed pellets are washed several times with water, followed by acetone, air-dried and weighed. Cellulose content is calculated in the percentage of total cell wall.

The hemicellulose content is estimated by hydrolysis of CW with 2M trifluoroacetic acid (TFA). Unhydrolyzed pellets are washed several times with water, followed by acetone, air-dried and weighed. Acid soluble hemicellulose content is calculated in the percentage of total cell wall.

### Lignin Content

The lignin content is determined by the analysis method TP-510-42618 of NREL (U.S. National Renewable Energy Laboratory) (Version 08-03-2012).

## Claims

1. A process for the depolymerization of lignin, comprising the following steps:
a) Providing a lignin solution or suspension;
b) Bringing the solution or suspension resulting from step a) to a temperature of from 350 to 430°C and to a pressure of at least 220 bar, and maintaining, simultaneously, said pressure and temperature for a time of between 40 and 450 ms, in order to obtain a depolymerized lignin mixture comprising oligomeric and monomeric phenolic compounds;
c) Isolating the oligomeric and monomeric phenolic compounds from the depolymerized lignin mixture.

2. Process according to claim 1, comprising a preliminary step prior to step a) of preparing a lignin solution or suspension from a lignin product.

3. Process according to claim 2, wherein the lignin product of the preliminary step comprises at most 50% cellulose by weight with respect to the total weight of the lignin product.

4. Process according to any one of claims 2 to 3, wherein the lignin product of the preliminary step comprises at least 10% lignin by weight with respect to the total weight of the lignin product.

5. Process according to any one of claims 1 to 4, wherein the solution or suspension of step a) comprises a base.

6. Process according to claim 5, wherein the base is an alkali metal hydroxide or an alkali metal bicarbonate.

7. Process according to any one of claims 1 to 6, wherein the concentration of lignin in the solution or suspension resulting from step a) is between 10% and 0.1% by weight with respect to the total weight of the solution or suspension.

8. Process according to any one of claims 1 to 7, wherein the bringing of the solution or suspension resulting from step a) to a temperature of from 350 to 430°C is achieved by adding to said solution or suspension a fluid, wherein the fluid is at a temperature higher than from 350 to 430°C.

9. Process according to any one of claims 1 to 8, wherein the bringing of the solution or suspension resulting from step a) to a temperature of from 350 to 430°C is effected within a time of 10 ms.

10. Process according to any one of claims 1 to 9, wherein immediately after the time of step b) has elapsed, a temperature reduction of between 125 and 300 °C is effected within a time of 1 ms.

11. Process according to any one of claims 1 to 10, wherein no metal catalyst is used during steps a) to b).

12. Process according to any one of claims 1 to 11, wherein no capping agent is used during steps a) to b).

13. Process according to any one of claims 1 to 12, wherein the process is a continuous flow process.

14. Process according to any one of claims 1 to 13, wherein step c) comprises:
i. If the depolymerized lignin mixture of step b) does not comprise a first liquid phase and a first solid phase, adding an acid to the depolymerized lignin mixture to obtain a first liquid phase and a first solid phase;
ii. Separating the first solid phase from the first liquid phase, and extracting the first liquid phase with an organic solvent to obtain a final organic phase comprising the oligomeric and monomeric phenolic compounds.

15. Process according to any one of claims 1 to 14, wherein the solution or suspension of step a) is black liquor or a solution or suspension of Kraft lignin.
